# EUROPÄISCHE PATENTSCHRIFT

(11) **EP 0 321 023 B1**
(45) Veröffentlichungstag und Bekanntmachung des Hinweises auf die Patenterteilung: **05.04.1995**
(21) Anmeldenummer: 88202789.9
(22) Anmeldetag: 06.12.1988
(51) Int. Cl.: H02J 9/06

(54) **Schaltungsanordnung zur Stromversorgung**
Circuit arrangement for a power source
Circuit pour alimentation

(30) Priorität: 12.12.1987 DE 3742188
(43) Veröffentlichungstag der Anmeldung: 21.06.1989
(73) Patentinhaber: Philips Patentverwaltung GmbH, 22335 Hamburg (DE); Philips Electronics N.V., 5621 BA Eindhoven (NL)
(72) Erfinder: Lösel, Walter, D-8510 Fürth (DE)
(74) Vertreter: Peuckert, Hermann, Dipl.-Ing.

(56) Entgegenhaltungen:
- ELECTRONIC DESIGN. vol. 24, no. 5, 1. März 1976, HASBROUCK HEIGHTS, NEW JERSEY, Seiten 62-64; A. LEVY: "KEEP YOUR POWER FLOWING WITH AN UNINTERRUPTIBLE SUPPLY. A BOOSTER ENERGY-STORAGE CIRCUIT TAKES OVER WHEN THE PRIMARY SOURCE MOMENTARILY FAILS".

## Beschreibung

Die Erfindung betrifft eine Schaltungsanordnung zur Stromversorgung gemäß des Oberbegriffs des Anspruches 1.

Eine solche Schaltungsanordnung zur Stromversorgung ist beispielsweise aus Electronik Design, vol. 24, no. 5, 01.03.1976, Hasbrouck Heights, New Jersey, Seiten 62 - 64, A. Levy, "KEEP YOUR POWER FLOWING WITH AN UNINTERUPTIBLE SUPPLY: A BOOSTER ENERGY-STORAGE CIRCUIT TAKE OVER WHEN THE PRIMARY SOURCE MOMENTARILY FAILS". Bei dieser bekannten Schaltungsanordnung wird zur Überbrückung von Spannungsunterbrechungen in einer Eingangsspannung eines Schaltnetzgerätes ein Kondensator als Energiespeicher verwendet. Sobald durch einen Komperator ein Spannungsabfall der Eingangsspannung festgestellt wird, wird durch den Komperator ein Steuertransistor angesteuert, welcher seinerseits wiederum einen Schalttransistor ansteuert, der den Kondensator mit dem Eingang des Schaltnetzgerätes verbindet. Die überbrückbare Zeitspanne eines Spannungsabfalls ist direkt abhängig von der im Kondensator speicherbaren Energie. Da es sich als Nachteilig erwiesen hat, zur Erhöhung der im Kondensator speicherbaren Energie lediglich die Kapazität des Kondensators zu erhöhen, wird bei dieser bekannten Schaltungsanordnung der Kondensator aus einer Hilfsspannungsquelle geladen, deren Ladespannung wesentlich höher ist als die Eingangsspannung. Da die Hilfsspannungsquelle nur eine geringe Strombelastung aufweist, muß eine entsprechende Ladezeit des Kondensators in Kauf genommen werden. Zur Verkürzung dieser Ladezeit sieht die bekannte Schaltungsanordnung weiterhin vor, den Kondensator mit der höher belastbaren Eingangsspannung vorzuladen. Hierzu ist bei dieser bekannten Schaltungsanordnung zur Entkoppelung eine Diode und ein Strombegrenzungswiderstand vorgesehen.

Aufgabe der Erfingung ist es eine derartige Schaltungsanordnung so weiterzubilden, daß nur ein Mindestmaß an Bauelementen benötigt wird.

Diese Aufgabe wird mit den gekennzeichneten Merkmalen des Anspruchs 1 gelöst.

Weitere vorteilhafte Ausgestaltungen der Erfindung ergeben sich aus den Unteransprüchen.

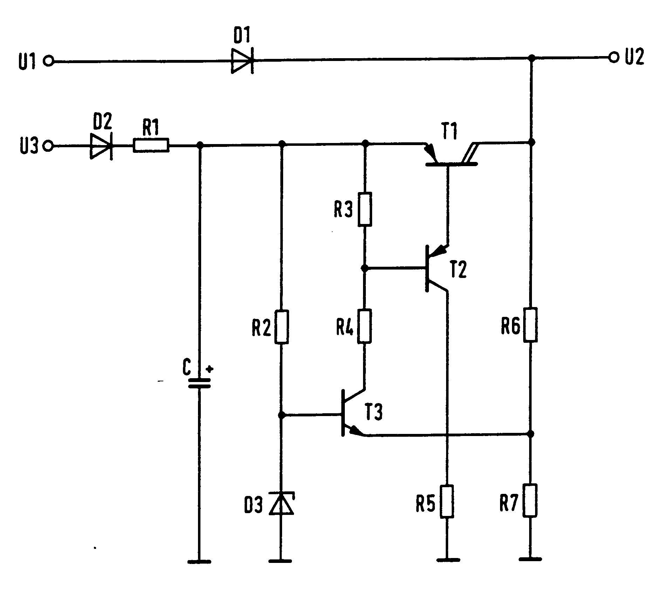

Die Erfindung wird anhand eines in der Figur dargestellten Ausführungsbeispiels näher beschrieben und erläutert.

Der Erfindung liegt der Gedanke zugrunde, daß Notstromversorgungen bspw. für Mikrocomputersysteme, erst nach Ablauf einer gewissen Zeit nach dem Einschalten des Mikrocomputersystems voll funktionsfähig sein müssen. Bei Mikrocomputersystemen bspw. sollte die Notstromversorgung in der Lage sein, solange einen Versorgungsstrom zu liefern, bis ein zu Beginn des Netzausfalls gestartetes Hilfsprogramm alle in flüchtigen Datenträgern gespeicherten Daten auf ein nichtflüchtiges Datenmedium übertragen hat. Erfolgt jedoch ein Netzausfall während der Initialisierungsphase des Mikrocomputersystems, so sind noch keine Daten angefallen, für die eine derartige Datenrettung sinnvoll wäre. Nach Beendigung des Netzausfalls muß das Mikrocomputersystem auf jeden Fall wieder mit der Initialisierungsroutine gestartet werden. Daher ist es völlig ausreichend, daß der Elektrolytkondensator, welcher die Energie für die Dauer der Rettungsroutine speichert, erst mit dem Ende der Initialisierungsphase voll aufgeladen ist. Der Ladestrom des Elektrolytkondensators ist klein gewählt. Dies hat den Vorteil, daß die Hilfsspannungsquelle für den Ladestrom nur für eine entsprechend geringe Belastbarkeit ausgelegt und daher mit geeigneten Bauelementen platzsparend aufgebaut sein kann.

Im ungestörten Betrieb wird bei der in der Figur gezeigten Schaltungsanordnung eine Ausgangsspannung U2 aus einer Versorgungsspannung U1 gewonnen. Die Versorgungsspannung U1 ist hierbei über eine erste Entkopplungsdiode einer Ausgangsklemme zugeführt, an welcher die Ausgangsspannung U2 abgegriffen werden kann. Bei einem Ausfall der Netzspannung, bei der auch die Versorgungsspannung zusammenbricht, kann hierdurch kein Strom von der Ausgangsklemme in die Versorgungsspannungsquelle zurückfließen. Eine Hilfsspannungsquelle, deren Hilfsspannung U3 ein Vielfaches der Ausgangsspannung U2 bzw. der Versorgungsspannung U1 beträgt, ist über eine zweite Entkopplungsdiode D2 mit einem Elektrolytkondensator C verbunden, dessen anderer Anschluß mit Bezugspotential verbunden ist. In Reihe zu dieser zweiten Entkopplungsdiode D2 liegt ein Strombegrenzungswiderstand R1. Der Strombegrenzungswiderstand R1 ist maximal so bemessen, daß mit Abschluß der Initialisierungsphase des Mikrocomputersystems der Elektrolytkondensator voll aufgeladen ist. Bei einem Kurzschluß zwischen Ausgang und Bezugspotential wird beim Ausführungsbeispiel durch eine nicht dargestellte Überlastschutzschaltung die Versorgungsspannung U1 abgeschaltet, während die Hilfsspannungsquelle weiterhin in Betrieb bleibt. Der hierbei durch die Schaltungsanordnung, insbesondere durch den Transistor T1, fließende Kurzschlußstrom wird mittels des Strombegrenzungswiderstandes R1 begrenzt und es wird so einer Zerstörung der Schaltungsanordnung vorgebeugt. Im Ausführungsbeispiel des Spannungswandlers für die Hilfsspannungsquelle wird eine Spannungsverdoppelungsschaltung verwendet. Diese kann vorteilhaft ohne Verwendung eines Transformators aufgebaut sein. Diese ist an einer Wechselspannungsquelle angeschlossen, aus der auch die Versorgungsspannung U1 gewonnen wird.

Der Kondensator C ist außerdem mit dem Emitter eines Transistors T1 verbunden, dessen Kollektor mit der Ausgangsklemme verbunden ist. Aus der Kondensatorspannung wird mittels einer parallel zum Kondensator liegenden Reihenschaltung aus einem Vorwiderstand R2 und einer Zenerdiode D3 eine Vergleichsspannung gewonnen, welche der Basis eines Vergleichertransistors T3 zugeführt ist. Der Emitter des Vergleichertransistors T3 ist mit dem Mittelabgriff eines aus einem ersten Teilwiderstand R6 und einem zweiten Teilwiderstand R7 gebildeten Spannungsteilers verbunden. Der Spannungsteiler selbst liegt zwischen der Ausgangsklemme und Bezugspotential. Der Kollektor des Vergleichertransistors T3 ist über einen durch eine Reihenschaltung von zwei Kollektorteilwiderständen R3 und R4 gebildeten Kollektorwiderstand mit dem Kondensator C verbunden. Unterschreitet die aus der Ausgangsspannung gewonnene Teilspannung über dem Spannungsteilerwiderstand R7 die Spannung der Zenerdiode abzüglich der Basis-Emitterspannung des Vergleichertransistors T3, so wird dieser leitend und durch die Kollektorteilwiderstände R3, R4 fließt ein Kollektorstrom. Die Basis des Transistors T1 ist mit dem Emitter eines Steuertransistors T2 verbunden, dessen Kollektor über einen Kollektorwiderstand R5 mit Bezugsspannungspotential verbunden ist. Die Basis des Steuertransistors T2 ist mit dem Mittelabgriff der Kollektorteilwiderstände R3, R4 verbunden. Sobald über die Kollektorteilwiderstände R3, R4 ein ausreichender Strom fließt, entsteht über diesen Kollektorteilwiderständen ein Spannungsabfall, welcher den Steuertransistor T2 aufsteuert. Der Emitterstrom des Steuertransistors steuert nun seinerseits den Transistor T1 auf, so daß vom Elektrolytkondensator C ein Ladestrom über den Transistor T1 zur Ausgangsklemme fließt. Die Transistoren bilden hierbei zusammen eine Regelschaltung, wodurch der Entladestrom des Elektrolytkondensators C so gesteuert wird, daß die Ausgangsspannung U2 konstant gehalten wird. Der an der Ausgangsklemme angeschlossene Spannungsteiler und die Kollektorteilwiderstände sind so dimensioniert, daß der Transistor T1 leitend wird, sobald die Spannung an der Ausgangsklemme kleiner ist als die kleinste Spannung, die bei einem ungestörten Betrieb der Versorgungsspannungsquelle auftreten kann. Diese Spannung muß jedoch mindestens gleich der kleinsten erlaubten Betriebsspannung der angeschlossenen Verbraucher sein.

Bei weiterer Entladung des Elektrolytkondensators C sinkt dessen Spannung unter die geforderte Ausgangsspannung U2 und weiter bis zur Zenerspannung der Diode D3. Sobald die Spannung über dem Elektrolytkondensator die Spannung der Zenerdiode D3 erreicht hat, bekommt der Vergleichertransistor T3 keinen Basisstrom mehr, und der Transistor T1 wird über den Steuertransistor T2 gesperrt. Durch entsprechende Dimensionierung der Zenerdiode D3 ist diese Spannung vorteilhafterweise gleich dem kleinsten möglichen Wert der Ausgangsspannung einzustellen. Dies bietet den Vorteil, daß die an der Ausgangsklemme angeschlossenen Verbraucher stets nur mit einer Ausgangsspannung versorgt werden, die sich innerhalb eines vorgegebenen Spannungsbereiches bewegt. Auf diese Weise werden unvorhersagbare Funktionen, die bei einem Unterschreiten der für die angeschlossenen Verbraucher erforderlichen Betriebsspannung auftreten können, vermieden, da die Ausgangsspannung in diesem Fall vollständig abgeschaltet wird.

Über den Strombegrenzungswiderstand R1 wird dem Elektrolytkondensator der Ladestrom zugeführt, weshalb die Spannung über dem Elektrolytkondensator C nur langsam ansteigt. Mittels einer im Ausführungsbeispiel dargestellten vorteilhaften Ausgestaltung der Schaltungsanordnung wird eine wesentliche Zeiteinsparung beim Aufladen des Elektrolytkondensators erreicht.

Die Spannung am Kollektor des Transistors T1 ist nach dem Einschalten der Versorgungsspannung U1 zunächst höher als die Spannung an seinem Emitter. Die Basis des Transistors T1 ist über die Emitter-Basis-Strecke des Steuertransistors T2 und dem Kollektorteilwiderstand R3 mit dem Elektrolytkondensator verbunden. Dies hat den Vorteil, daß der Transistor T1 im sogenannten Inversbetrieb leitfähig ist, wenn ein entsprechender Basisstrom fließt, und die Spannung am Kollektor des Transistors T1 größer ist als die Spannung an seinem Emitter. Wenn Transistor T1 und Steuertransistor T2 vom gleichen Leitungstyp sind (pnp-Leitungstyp im Ausführungsbeispiel) fließt bei entsprechend ausreichender Kollektor-Emitter-Spannung des Transistors T1 ein Kollektor-Emitter-Strom in die Emitter-Basis-Strecke des Steuertransistors T2, welcher einen entsprechenden Kollektorstrom im Transistor T1 auslöst. Da dieser Kollektor-Emitterstrom viel höher ist als der über den Strombegrenzungswiderstand R1 fließende Strom wird der Elektrolytkondensator durch diesen Kollektor-Emitter-Strom sehr schnell geladen, bis die Spannung über dem Elektrolytkondensator nahezu die Spannung am Kollektor des Transistors T1 erreicht hat. Sodann kann kein Kollektor-Basis-Strom mehr fließen und der Transistor T1 geht in den Sperrzustand über.

Auf diese Weise wird der Elektrolytkondensator sehr schnell auf die Ausgangsspannung U2 aufgeladen, so daß dieser in kurzer Zeit mit einer Grundladung vorgeladen ist. Die Restladung des Elektrolytkondensators wird daraufhin, wie bereits beschrieben, über den Strombegrenzungswiderstand R1 aufgebracht. Entsprechend der Grundladung wird die Betriebsbereitschaft dieser Notstromeinrichtung schneller hergestellt.

## Patentansprüche

1. Schaltungsanordnung zur Stromversorgung, deren Ausgang über eine Diode (D₁) eine Versorgungsspannung (U₁) zugeführt ist, mit einem Kondensator (C), dem über eine weitere Diode (D₂) die Ladespannung einer Hilfsspannungsquelle (U₃), die größer als die Versorgungsspannung (U₁) ist, zugeführt ist, mit einer Vergleicherschaltung die dazu vorgesehen ist bei Spannungsabfall ein zwischen Kondensator (C) und Ausgang liegendes Schaltelement (T₁) leitend zu steuern, wobei weiterhin vorgesehen ist den Kondensator mit der Versorgungsspannung (U₁) vorzuladen,
dadurch gekennzeichnet,
daß das Schaltelement ein Transistor (T1) ist, der zur Vorladung des Kondensators (C) invers betrieben wird.

2. Schaltungsanordnung nach Anspruch 1,
dadurch gekennzeichnet,
daß die Vergleicherschaltung aus einem Vergleichertransistor (T3) gebildet wird, welcher basisseitig am Abgriff eines parallel zum Kondensator (C) liegenden Spannungsteiles (R2, D3) angeschlossen ist und einen Steuertransistor (T2) ansteuert, welcher mit dem Transistoren (T1) verbunden ist.

3. Schaltungsanordnung nach Anspruch 2,
dadurch gekennzeichnet,
daß Transistor (T1) und Steuertransistor (T2) vom gleichen Leitungstyp sind.

## Claims

1. A circuit arrangement for power supply whose output receives a supply voltage (U1) via a diode (D1) and which comprises a capacitor (C) which receives, via a further diode (D2), the charging voltage from an auxiliary voltage source (U3) which is higher than the supply voltage (U1), a comparator circuit which serves to render conducting, in the event of a voltage drop, a switching element (T1) which is arranged between the capacitor (C) and the output, the capacitor furthermore being precharged by means of the supply voltage (U1), characterized in that the switching element is a transistors (T1) which is operated in the inverse mode for the precharging of the capacitor (C).

2. A circuit arrangement as claimed in Claim 1, characterized in that the comparator circuit is formed by a transistor (T3) which is connected at its base side to the tapping of a voltage divider (R2, D3), connected parallel to the capacitor (C), and which drives a control transistor (T2) which is connected to the transistor (T1).

3. A circuit arrangement as claimed in Claim 2, characterized in that the transistor (T1) and the control transistor (T2) are of the same conductivity type.

## Revendications

1. Circuit pour alimentation en courant, à la sortie duquel est appliquée une tension d'alimentation (U₁) par l'intermédiaire d'une diode (D₁), comportant un condensateur (C) auquel est appliquée par l'intermédiaire d'une autre diode (D₂) la tension de charge provenant d'une source de tension auxiliaire (U₃), qui est supérieure à la tension d'alimentation (U₁), un circuit comparateur prévu pour rendre conducteur dans le cas d'une chute de tension un élément de commutation (T₁) intercalé entre le condensateur (c) et la sortie, en outre étant prévu la précharge du condensateur de la tension d'alimentation (U₁), caractérisé en ce que l'élément commutateur est un transistor (T1) fonctionnant à l'inverse pour précharger le condensateur (C).

2. Circuit selon la revendication 1, caractérisé en ce que le circuit comparateur est constitué d'un transistor comparateur (T3) dont la base est reliée à la jonction d'un diviseur de tension (R2, D3) monté en parallèle au condensateur (C) et qu'il commande un transistor de commande (T2) relié au transistor (T1).

3. Circuit selon la revendication 2, caractérisé en ce que le transistor (T1) et le transistor de commande (T2) présentent le même type de conduction.
